# EUROPEAN PATENT APPLICATION

(11) **EP 4 717 685 A1**
(43) Date of publication of application: **01.04.2026**
(21) Application number: 24851392.1
(22) Date of filing: 13.06.2024
(51) Int. Cl.: C04B 35/195

(54) **CORDIERITE SINTERED BODY**

(30) Priority: 08.08.2023 JP 2023129489
(71) Applicant: Krosakiharima Corporation, Kitakyushu-shi, Fukuoka 806-8586 (JP)
(72) Inventor: HATTORI, Kensaku, Kitakyushu-shi, Fukuoka 806-8586 (JP); NAKABAYASHI, Masashi, Tokyo 100-8071 (JP)
(74) Representative: Vossius & Partner Patentanwälte Rechtsanwälte mbB
(86) International application number: PCT/JP2024/021479
(87) International publication number: WO 2025/032959

(57) **Abstract**

Provided is a cordierite-based sintered body whose rigidity is further improved without impairing its properties such as low thermal expansion coefficient, dimensional stability over time, and ability to achieve precision polishing. The cordierite-based sintered body comprises cordierite as a primary crystal phase and MgAl₂Si₄O₆N₄ as a secondary crystal phase, wherein the ratio I_{MASON} (400)/I_{MAS} (312) is in the range of 0.05 to 0.28, where the I_{MASON} (400) denotes a peak intensity of a (400) plane of MgAl₂Si₄O₆N₄ as measured by X-ray powder diffractometry, and the I_{MAS} (312) denotes a peak intensity of a (312) plane of the cordierite as measured by X-ray powder diffractometry.

## Description

### TECHNICAL FIELD

The present invention relates to a cordierite-based sintered body suitably usable as a substrate for a satellite mirror, a substrate for an aspherical telescope mirror, a substrate for a precision mirror, a substrate for a power laser mirror, a substrate for a reference scale, a table member of a precision measuring machine, a table member of a precision exposure apparatus, a standard component related to precision measurement, and the like.

### BACKGROUND ART

With the progress in high-precision satellites and telescopes, highly integrated semiconductor devices, high-precision aspherical lenses, etc., components used in relevant space and astronomical devices, semiconductor manufacturing apparatuses, and measurement devices are increasingly expected to have high shape/dimensional precision, and long-term dimensional stability.

Further, for these ultra-precision devices/apparatuses, a reference mirror for reflection of laser or ultraviolet light, a mirror for positioning laser or ultraviolet light, an aspherical mirror for light focusing, etc., are becoming increasingly necessary. These precision mirrors require a very smooth surface (surface having a small surface roughness), and a material thereof is increasingly expected to have high quality that can provide a super-smooth surface. There has been known a material disclosed in Patent Document 1, as the high-quality material capable of providing a super-smooth surface.

Specifically, the Patent Document 1 discloses a cordierite-based sintered body comprising cordierite as a primary crystal phase, and LaMgAl₁₁O₁₉ as a secondary crystal phase, wherein the cordierite-based sintered body has a Young's modulus of 142 GPa or more. This Patent Document 1 makes it possible to obtain a low thermal expansion material having both ability to achieve precision polishing (ability to achieve high-precision mirror finishing) and ability to achieve complex microfabrication.

However, in recent years, there has been a growing need for a cordierite-based sintered body having higher rigidity.

### PRIOR ART DOCUMENTS

### [Patent Document]

Patent Document 1: JP 2016-204198 A

### SUMMARY OF INVENTION

### [Technical Problem]

The technical problem to be solved by the present invention is to provide a cordierite-based sintered body whose rigidity is further improved without impairing its properties such as low thermal expansion coefficient, dimensional stability over time, and ability to achieve precision polishing.

### [Solution to Technical Problem]

As a result of various studies for solving the above technical problem, the present inventors have found that the technical problem can be solved by incorporating, into a cordierite-based sintered body whose primary crystal phase consists of cordierite, MgAl₂Si₄O₆N₄ as a secondary crystal phase, and have completed the present invention.

Specifically, the above technical problem is solved by the following present inventions.
(1) A cordierite-based sintered body comprising cordierite as a primary crystal phase and MgAl₂Si₄O₆N₄ as a secondary crystal phase, wherein a ratio I_{MASON} (400)/I_{MAS} (312) is in the range of 0.05 to 0.28, where the I_{MASON} (400) denotes a peak intensity of a (400) plane of MgAl₂Si₄O₆N₄ as measured by X-ray powder diffractometry, and the I_{MAS} (312) denotes a peak intensity of a (312) plane of the cordierite as measured by X-ray powder diffractometry.
(2) The cordierite-based sintered body as set forth in (1), having a Young's modulus of 145 GPa or more
(3) The cordierite-based sintered body as set forth in (1) or (2), having a thermal expansion coefficient whose absolute value is 0.05×10⁻⁶/° C or less, as measured at 22° C.

### [Advantageous Effects of Invention]

The cordierite-based sintered body according to the present invention is improved in terms of rigidity by incorporating, into cordierite as a primary crystal phase, MgAl₂Si₄O₆N₄ as a secondary crystal phase. That is, the present invention makes it possible to provide a cordierite-based sintered body whose rigidity is further improved without impairing its properties such as low thermal expansion coefficient, dimensional stability over time, and ability to achieve precision polishing.

### BRIEF DESCRIPTION OF THE DRAWINGS

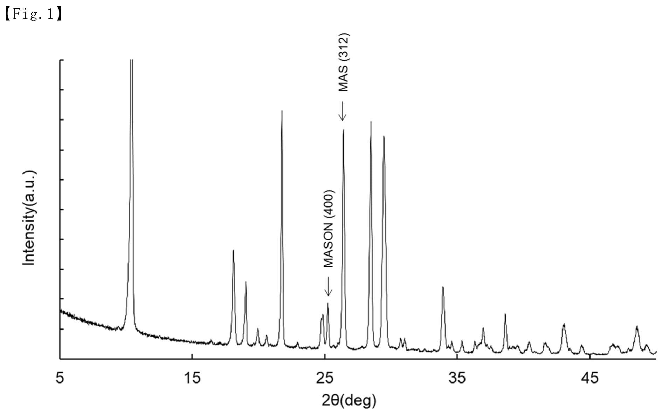

FIG. 1 shows intensity data measured by X-ray powder diffractometry using Cu-Kα radiation, for Inventive Example 5 in Table 1, which is an example of the invent invention.

### DESCRIPTION OF EMBODIMENTS

A cordierite-based sintered body according to the present invention comprises cordierite as a primary crystal phase and MgAl₂Si₄O₆N₄ (hereinafter referred to as "N crystal phase") as a secondary crystal phase. In the present invention, the term "cordierite (or cordierite crystal phase)" encompasses not only a pure cordierite crystal phase, but also a crystal phase which has a lattice constant slightly changed due to solid solution of other elements, but can be identified as having a diffraction peak of a cordierite crystal by X-ray diffraction.

In the cordierite-based sintered body according to the present invention, the N crystal phase is included such that the ratio I_{MASON} (400)/I_{MAS} (312) is in the range of 0.05 to 0.28, where the I_{MASON} (400) denotes a peak intensity of a (400) plane of the N crystal phase as measured by X-ray powder diffractometry, and the I_{MAS} (312) denotes a peak intensity of a (312) plane of the cordierite as measured by X-ray powder diffractometry. If the ratio I_{MASON} (400)/I_{MAS} (312) is less than 0.04, the effect of the N crystal phase on rigidity improvement cannot be obtained. On the other hand, if the ratio I_{MASON} (400)/I_{MAS} (312) is greater than 0.28, low thermal expansibility based on cordierite is impaired. The ratio I_{MASON} (400)/I_{MAS} (312) is preferably set in the range of 0.08 to 0.12. In X-ray power diffractometry using Cu-Kα radiation, the peak of the (400) plane of the N crystal phase is observed around a diffraction angle (2θ) of 25.2°, and the peak of the (312) plane of the cordierite is observed around a diffraction angle (2θ) of 26.3°.

The cordierite-based sintered body according to the present invention comprises cordierite as the primary crystal phase, as described above. Specifically, it comprises cordierite preferably in an amount of 87% by mass or more. The cordierite-based sintered body according to the present invention also comprises the N crystal phase as the secondary crystal phase. As the secondary crystal phase, it may further comprise , for example: a mullite crystal phase; silicon nitride or sialon, which is a raw material of the N crystal phase; Si₂₋ₓAlₓO₁₊ₓN₂₋ₓ (O'-sialon) or Si₂N₂O (silicon oxynitride), which is generated as a by-product in the course of synthesis of the N crystal phase; or the like. However, from a viewpoint of improving rigidity without impairing innate properties of cordierite, such as low thermal expansion coefficient, dimensional stability over time, and ability to achieve precision polishing, a crystal phase observed in the cordierite-based sintered body according to the present invention by X-ray power diffraction may be comprised of only two phases of cordierite and the N crystal phase, wherein in addition to cordierite and the N crystal phase, silicon nitride or sialon, which is a raw material of the N crystal phase; Si₂₋ₓAlₓ O₁₊ₓN₂₋ₓ (O'-sialon) or Si₂N₂O (silicon oxynitride) generated as a by-product in the course of synthesis of silicon nitride; or the like, may partially remain.

In order to reduce self-weight deformation and/or deformation caused by acceleration, the rigidity of the cordierite-based sintered body according to the present invention is preferably specifically set such that a Young's modulus is 145 GPa or more. Further, considering deformation due to temperature change, the thermal expansion coefficient of the cordierite-based sintered body according to the present invention is preferably as small as possible, more preferably, 0.05 × 10⁻⁶/K or less at 22°C. Considering that thermal expansion is very small, as the thermal expansion coefficient, a value is used which is measured by JIS R 3251 (Measuring method of linear thermal expansion coefficient for low expansion glass by laser interferometry).

The cordierite-based sintered body according to the present invention can be produced by: mixing raw material powders (MgO source, Al₂O₃ source, SiO₂ source, and N source); further mixing a sintering aid therewith as needed; and sintering the resulting mixture.

Examples of raw material powders usable as the MgO source include a magnesia powder, a talc powder, an electrofused cordierite powder, a synthetic cordierite powder, a magnesium hydroxide powder, a magnesium carbonate powder, and a magnesia spinel powder. From a viewpoint of sinterability of a large-shaped or complex-shaped body, the electrofused cordierite or synthetic cordierite powder is optimal as the raw material powder. Further, examples of raw material powders usable as the Al₂O₃ source and the SiO₂ source include a fine alumina powder, a crystalline silica powder, and an amorphous silica powder, in addition to the above-mentioned talc powder, electrofused cordierite powder, and synthetic cordierite powder. Examples of raw material powders usable as the N source include a silicon nitride powder, and a sialon powder. Examples of the sintering aid usable herein include calcium carbonate, and ferric oxide. From a viewpoint of dispersibility of the raw material powders and the sintering aid, an average particle size thereof is preferably set in the range of 0.1 to 5 µm.

Examples of the sintering method applicable herein includes a hot press process, a hot isostatic pressing (HIP) process, a gas-pressure sintering process, and a pressureless sintering process. However, in view of the fact that with a view to reducing average surface roughness during precision polishing, it is necessary to minimize the number of pores in a sintered body, a pressure sintering process, such as the hot press process, the HIP process, or the gas-pressure sintering process, is effective in final heat treatment. Further, a sintering atmosphere may be an argon or nitrogen atmosphere.

### EXAMPLES

With regard to raw material powders, a synthetic cordierite powder (average particle size: 1.9 µm) was used as the MgO source, the Al₂O₃ source, and the SiO₂ source, and a silicon nitride powder (average particle size: 1.1 µm) was used as the N source. Further, a calcium carbonate powder (average particle size: 0.9 µm) was used as the sintering aid. The synthetic cordierite used was prepared by: mixing a magnesia powder, a silica powder, and an alumina powder in a theoretical (stoichiometric) composition; and reacting the resulting mixed power at 1420°C for 10 hours to form granulated cordierite; and pulverizing the granulated cordierite

The raw material powders and the sintering aid were blended as shown in Table 1, and after adding a resin binder thereto, mixed together in a ball mill for 24 hours using water as a solvent. The obtained slurry was granulated by drying, and formed in a shaped body at a hydrostatic pressure of 150 MPa. The obtained shaped body was degreased, and then sintered at 1300°C or more in an argon or nitrogen atmosphere, whereafter it was subjected to burning under HIP, at 1300°C at an argon gas pressure of 100 MPa.

The obtained sintered body was subjected to measurements of bulk density, thermal expansion coefficient at 22°C, and Young's modulus. Specifically, the bulk density was measured by a method based on JIS R1634. The thermal expansion coefficient at 22°C was measured by the above-mentioned JIS R3251 (Measuring method of linear thermal expansion coefficient for low expansion glass by laser interferometry). The Young's modulus was measured by an ultrasonic pulse-echo method.

Further, the obtained sintered body was subjected to measurement of the average surface roughness (Ra) of a precision-polished surface thereof to evaluate its ability to achieve precision polishing. Specifically, precision polishing was performed with respect to a sample having a size of 100 × 100 × 20 mm, and the average surface roughness (Ra) of a precision-polished surface of the sample was measured by non-contact scanning white light interferometry. In the precision polishing, after medium-finishing using a ceria slurry having an average particle size of 0.5 µm, final finishing was performed using a diamond slurry having a particle size of about 1/10 µm.

Further, the obtained sintered body was powdered, and the resulting power was subjected to X-ray power diffraction measurement using Cu-Kα radiation (wavelength: 1.54059 Å) to identify a generated crystal phase, and the ratio of I_{MASON} (400) denoting a peak intensity of a (400) plane of the N crystal phase to the I_{MAS} (312) denoting a peak intensity of a (312) plane of the cordierite, i.e., I_{MASON} (400)/I_{MAS} (312), was obtained.

The content rate of the cordierite in the obtained sintered body is substantially equal to the blending percentage of the synthetic cordierite powder (notated as "CDR" in Table 1) shown in Table 1.

### [TABLE 1]

Inventive Examples 1 to 6 in Table 1 are examples each falling within to the scope of the present invention as defined by the appended claims. Each of the cordierite-based sintered bodies in these Inventive Examples exhibits: a thermal expansion coefficient whose absolute value is 0.05 × 10⁻⁶/°C or less as measured at 22°C; a precision-polished surface whose average surface roughness (Ra) is 0.9 nm or less; and a Young's modulus of 145 GPa or more, i.e., has low expansion coefficient, ability to achieve precision polishing, and high rigidity. Among them, Inventive Examples 2 to 4 are example in each of which the ratio I_{MASON} (400)/I_{MAS} (312) is in a preferable range of 0.08 to 0.12. The cordierite-based sintered bodies in Inventive Examples 2 to 4 have low expansion coefficient and high rigidity in a well-balanced manner. FIG. 1 shows data of Inventive Example 5 as one example of the result of the X-ray power diffraction measurement. The crystal phase substantially comprises: two phases of cordierite and N crystal phase; O'-sialon, and silicon oxynitride. The same could be said about other Inventive Examples.

Comparative Example 1 in Table 1 is an example in which the ratio I_{MASON} (400)/I_{MAS} (312) is below the lower limit of the present invention. The Young's modulus is low, and the rigidity is not sufficient. On the other hand, Comparative Example 2 is an example in which the ratio I_{MASON} (400)/I_{MAS} (312) is greater than the upper limit of the present invention. The thermal expansion coefficient becomes higher, and the average surface roughness (Ra) of the precision-polished surface becomes larger, resulting in deterioration in the ability to achieve precision polishing.

### INDUSTRIAL APPLICABILITY

The cordierite-based sintered body according to the present invention is usable as a support member, table, or slider for a precision stage, as well as a satellite mirror substrate, an aspherical mirror substrate for telescopes, an ultraprecision mirror substrate, a power laser mirror substrate, and is also usable as a standard component related to precision measurement, such as a scale board and gages for an encoder, a calibration standard, a reference scale, an optical flat, or a photomask standard.

## Claims

1. A cordierite-based sintered body comprising cordierite as a primary crystal phase and MgAl₂Si₄O₆N₄ as a secondary crystal phase, wherein a ratio I_{MASON} (400)/I_{MAS} (312) is in the range of 0.05 to 0.28, where the I_{MASON} (400) denotes a peak intensity of a (400) plane of MgAl₂Si₄O₆N₄ as measured by X-ray powder diffractometry, and the I_{MAS} (312) denotes a peak intensity of a (312) plane of the cordierite as measured by X-ray powder diffractometry.

2. The cordierite-based sintered body as claimed in claim 1, having a Young's modulus of 145 GPa or more.

3. The cordierite-based sintered body as claimed in claim 1 or 2, having a thermal expansion coefficient whose absolute value is 0.05× 10⁻⁶/°C or less, as measured at 22°C.
